(19) Europäisches Patentamt / European Patent Office / Office européen des brevets

(11) **EP 4 265 659 A1**

(12) **EUROPEAN PATENT APPLICATION**
published in accordance with Art. 153(4) EPC

(43) Date of publication:
**25.10.2023 Bulletin 2023/43**

(21) Application number: **21906172.8**

(22) Date of filing: **01.11.2021**

(51) International Patent Classification (IPC):
*C08F 290/06* (2006.01)    *C08K 9/04* (2006.01)
*C08L 101/00* (2006.01)    *C08K 3/20* (2006.01)
*G02B 6/44* (2006.01)

(52) Cooperative Patent Classification (CPC):
C08F 290/06; C08K 3/20; C08K 9/04;
C08L 101/00; G02B 6/44

(86) International application number:
**PCT/JP2021/040296**

(87) International publication number:
**WO 2022/130808 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.12.2020   JP 2020208204**

(71) Applicant: **SUMITOMO ELECTRIC INDUSTRIES,
LTD.**
**Osaka-shi, Osaka 541-0041 (JP)**

(72) Inventors:
• **HAMAKUBO Katsushi**
**Osaka-shi, Osaka 541-0041 (JP)**
• **TOKUDA Chiaki**
**Osaka-shi, Osaka 541-0041 (JP)**

(74) Representative: **Müller-Boré & Partner
Patentanwälte PartG mbB
Friedenheimer Brücke 21
80639 München (DE)**

(54) **RESIN COMPOSITION, SECONDARY COATING MATERIAL FOR OPTICAL FIBER, OPTICAL FIBER, AND METHOD FOR MANUFACTURING OPTICAL FIBER**

(57)    A resin composition comprises: a photopolymerizable compound, a photopolymerization initiator, and a surface-modified inorganic oxide particle having an ultraviolet curable functional group, wherein the content of the chemically adsorbed component in the organic component constituting the surface-modified inorganic oxide particle is more than 70% by mass based on the total amount of the organic component.

*Fig.1*

EP 4 265 659 A1

**Description**

**Technical Field**

The present disclosure relates to a resin composition, a secondary coating material for an optical fiber, an optical fiber, and a method for manufacturing an optical fiber.

This application claims priority based on Japanese Patent Application No. 2020-208204 filed on December 16, 2020, and incorporates all the contents described in the Japanese application.

**Background Art**

An optical fiber has a coating resin layer for protecting a glass fiber that is an optical transmission medium. The coating resin layer generally comprises a primary resin layer and a secondary resin layer. In order to reduce an increase in transmission loss induced by micro-bend generated when lateral pressure is applied to the optical fiber, the optical fiber has been required to have excellent lateral pressure characteristics.

In Patent Literature 1, improvement in the lateral pressure characteristics of the optical fiber is investigated by incorporating a filler into the outermost layer of the coating resin layer.

**Citation List**

**Patent Literature**

[Patent Literature 1] JP 2014-219550 A

**Summary of Invention**

A resin composition according to an aspect of the present disclosure comprises: a photopolymerizable compound, a photopolymerization initiator, and a surface-modified inorganic oxide particle having an ultraviolet curable functional group, wherein the content of the chemically adsorbed component in the organic component constituting the surface-modified inorganic oxide particle is more than 70% by mass based on the total amount of the organic component.

A secondary coating material for an optical fiber according to an aspect of the present disclosure comprises the above resin composition.

An optical fiber according to an aspect of the present disclosure comprises a glass fiber comprising a core and a cladding, a primary resin layer being in contact with the glass fiber and coating the glass fiber, and a secondary resin layer coating the primary resin layer, wherein the secondary resin layer comprises a cured product of the above resin composition.

A method for manufacturing an optical fiber according to an aspect of the present disclosure comprises: an application step of applying the above resin composition to the outer periphery of a glass fiber composed of a core and a cladding; and a curing step of curing the resin composition by irradiating with ultraviolet rays after the application step.

**Brief Description of Drawing**

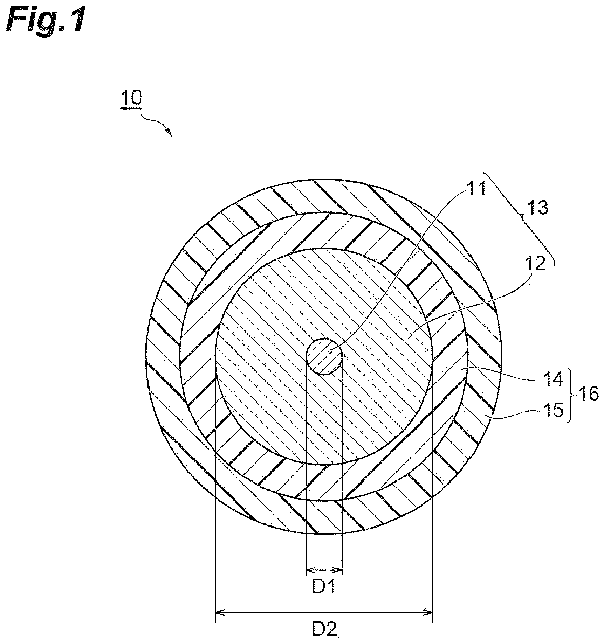

[FIG.1] FIG. 1 is a schematic cross-section diagram showing an example of the optical fiber according to the present embodiment.

**Description of Embodiments**

[Problem to be Solved by the Present Disclosure]

The secondary resin layer containing a filler has a high Young's modulus and therefore is hardly affected by lateral pressure, but the toughness tends to decrease. Therefore, the secondary resin layer is required to have excellent toughness while maintaining a high Young's modulus.

An object of the present disclosure is to provide a resin composition capable of forming a resin layer capable of having both high Young's modulus and excellent toughness, and an optical fiber comprising a secondary resin layer formed from the resin composition.

[Effect of the Present Disclosure]

The present disclosure can provide: a resin composition capable of forming a resin layer capable of having both high Young's modulus and excellent toughness; and an optical fiber comprising a secondary resin layer formed from the resin composition.

[Description of Embodiments of the Present Disclosure]

First, the contents of the embodiment of the present disclosure will be described by listing them. A resin composition according to an aspect of the present disclosure comprises: a photopolymerizable compound, a photopolymerization initiator, and a surface-modified inorganic oxide particle having an ultraviolet curable functional group, wherein the content of the chemically adsorbed component in the organic component constituting the surface-modified inorganic oxide particle is more than 70% by mass based on the total amount of the organic component.

Such a resin composition can form a resin layer having both high Young's modulus and excellent toughness by using the surface-modified inorganic oxide particle in which the content of the chemically adsorbed component in the organic components constituting the surface-modified inorganic oxide particle is more than 70% by mass based on the total amount of the organic components.

From the viewpoint of allowing to further achieve both high Young's modulus and excellent toughness, the functional group may be at least one group selected from the group consisting of an acryloyl group, a methacryloyl group, and a vinyl group.

From the viewpoint of allowing to further achieve both high Young's modulus and excellent toughness, the average primary particle size of the surface-modified inorganic oxide particle may be 100 nm or less.

From the viewpoint of allowing to further achieve both high Young's modulus and excellent toughness, the content of the surface-modified inorganic oxide particle may be 1% by mass or more and 60% by mass or less based on the total amount of the resin composition.

A secondary coating material for an optical fiber according to an aspect of the present disclosure comprises the above resin composition. Using such a secondary coating material for an optical fiber can produce an optical fiber having excellent lateral pressure characteristics and toughness.

An optical fiber according to an aspect of the present disclosure comprises a glass fiber comprising a core and a cladding, a primary resin layer being in contact with the glass fiber and coating the glass fiber, and a secondary resin layer coating the primary resin layer, wherein the secondary resin layer comprises a cured product of the above resin composition. Such an optical fiber has excellent lateral pressure characteristics and toughness because of comprising the secondary resin layer containing a cured product of the resin composition.

A method for manufacturing an optical fiber according to an aspect of the present disclosure comprises: an application step of applying the above resin composition to the outer periphery of a glass fiber composed of a core and a cladding; and a curing step of curing the resin composition by irradiating with ultraviolet rays after the application step. This can produce an optical fiber having excellent lateral pressure characteristics and toughness.

[Detail of Embodiment of the Present Disclosure]

Specific examples of a resin composition and an optical fiber according to the present embodiment will be described referring to the drawing as necessary. The present disclosure is not limited to these illustrations but is indicated by the claims and intended to include meanings equivalent to the claims and all modifications within the claims. In the following description, the same reference numerals are given to the same elements in the description of the drawing, and redundant explanations are omitted.

<Resin composition>

The resin composition according to the present embodiment comprises a photopolymerizable compound, a photopolymerization initiator, and a surface-modified inorganic oxide particle having an ultraviolet curable functional group.

(Photopolymerizable compound)

The photopolymerizable compound according to the present embodiment can comprise urethane (meth)acrylate from the viewpoint of adjusting Young's modulus. The photopolymerizable compound according to the present embodiment does not comprise surface-modified inorganic oxide particles having an ultraviolet curable functional group.

As urethane (meth)acrylate, a reaction product obtained by reacting a polyol compound, a polyisocyanate compound, and a hydroxyl group-containing (meth)acrylate compound can be used. Such a urethane (meth)acrylate has a urethane structure based on a reaction between a polyol compound and a polyisocyanate compound, and a (meth)acryloyl group bonded to a terminal of the urethane structure. (Meth)acrylate means an acylate or a methacrylate corresponding to it. The same applies to (meth)acrylic acid.

Examples of the polyol compound include polytetramethylene glycol, polypropylene glycol and bisphenol A-ethylene oxide addition diol. Examples of the polyisocyanate compound include 2,4-tolylene diisocyanate, 2,6-tolylene diisocyanate, isophorone diisocyanate, and dicyclohexylmethane 4,4'-diisocyanate. Examples of the hydroxyl group-containing (meth)acrylate compound include 2-hydroxyethyl (meth)acrylate, 2-hydroxybutyl (meth)acrylate, 1,6-hexanediol mono(meth)acrylate, pentaerythritol tri(meth)acrylate, 2-hydroxypropyl (meth)acrylate, and tripropylene glycol mono(meth)acrylate.

From the viewpoint of adjusting the Young's modulus of the resin layer, the number average molecular weight (Mn) of the polyol compound is preferably 300 or more and 4000 or less, more preferably 400 or more and 3000 or less, and further preferably 500 or more and 2500 or less. The Mn of the polyol compound may be 2000 or less, 1500 or less, or 1000 or less.

As a catalyst for synthesizing urethane (meth)acrylate, an organotin compound is generally used. Examples of the organotin compound include dibutyltin dilaurate, dibutyltin diacetate, dibutyltin maleate, dibutyltin bis(2-ethylhexyl mercaptoacetate), dibutyltin bis(isooctyl mercaptoacetate), and dibutyltin oxide. From the viewpoint of easy availability and catalyst performance, it is preferable to use dibutyltin dilaurate or dibutyltin diacetate as the catalyst.

When urethane (meth)acrylate is synthesized, lower alcohols having 5 or less carbon atoms may be used. Examples of the lower alcohols include methanol, ethanol, 1-propanol, 2-propanol, 1-butanol, 2-butanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol, and 2,2-dimethyl-1-propanol.

The photopolymerizable compound according to the present embodiment can comprise epoxy (meth)acrylate from the viewpoint of adjusting Young's modulus. Examples of the epoxy (meth)acrylate include aliphatic epoxy (meth)acrylate and aromatic epoxy (meth)acrylate. The aliphatic epoxy (meth)acrylate means epoxy (meth)acrylate having no aromatic ring, and the aromatic epoxy (meth)acrylate means epoxy (meth)acrylate having an aromatic ring.

As the aliphatic epoxy (meth)acrylate, a reaction product obtained by reacting a compound having a (meth)acryloyl group such as (meth)acrylic acid with an aliphatic epoxy compound having two or more glycidyl groups can be used.

From the viewpoint of further increasing the toughness of the resin layer, it is preferable that the aliphatic epoxy (meth)acrylate has an ethylene oxide group or a propylene oxide group. Examples of the aliphatic epoxy (meth)acrylate include a (meth)acrylic acid adduct of propylene glycol diglycidyl ether, a (meth)acrylic acid adduct of polypropylene glycol diglycidyl ether, a (meth)acrylic acid adduct of ethylene glycol diglycidyl ether, and a (meth)acrylic acid adduct of polyethylene glycol diglycidyl ether.

Examples of commercially available products of the aliphatic epoxy (meth)acrylate include trade names "epoxy ester 40EM", "epoxy ester 70PA", "epoxy ester 200PA", and "epoxy ester 80MFA" manufactured by Kyoeisha Chemical Co., Ltd.

As the aromatic epoxy (meth)acrylate, a reaction product obtained by reacting a compound having a (meth)acryloyl group such as (meth)acrylic acid with an aromatic epoxy compound having two or more glycidyl groups can be used. Examples of the aromatic epoxy (meth)acrylate include a (meth)acrylic acid adduct of bisphenol A diglycidyl ether. Examples of a commercially available aromatic epoxy (meth)acrylate include trade name "Viscoat #540" manufactured by Osaka Organic Chemical Industry Ltd.

From the viewpoint of imparting flexibility to the resin layer to further achieve both high Young's modulus and excellent toughness, the content of the epoxy (meth)acrylate is preferably 10% by mass or more and 70% by mass or less, more preferably 20% by mass or more and 60% by mass or less, and further preferably 30% by mass or more and 50% by mass or less, based on the total amount of the photopolymerizable compound.

The photopolymerizable compound according to the present embodiment may comprise a photopolymerizable compound (hereinafter, referred to as "monomer") other than urethane (meth)acrylate and epoxy (meth)acrylate.

Examples of the monomer include a monofunctional monomer having one photopolymerizable group or a multifunctional monomer having two or more photopolymerizable groups. These monomers may be used singly, or may be used in combination of two or more.

Examples of the monofunctional monomer include (meth)acrylate monomers such as methyl (meth)acrylate, ethyl (meth)acrylate, propyl (meth)acrylate, n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 2-phenoxyethyl (meth)acrylate, 3-phenoxybenzyl acrylate, phenoxydiethylene glycol acrylate, phenoxypolyethylene glycol acrylate, 4-tert-butylcyclohexanol acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, nonylphenoxypolyethylene glycol (meth)acrylate, and isobornyl

(meth)acrylate; carboxyl group containing monomers such as (meth)acrylic acid, (meth)acrylic acid dimer, carboxyethyl (meth)acrylate, carboxypentyl (meth)acrylate, and ω-carboxy-polycaprolactone (meth)acrylate; heterocycle containing monomers such as N-(meth)acryloyl morpholine, N-vinyl pyrrolidone, N-vinyl caprolactam, N-acryloylpiperidine, N-methacryloylpiperidine, N-(meth)acryloylpyrrolidine, 3-(3-pyridine) propyl (meth)acrylate, and cyclic trimethylolpropane formal acrylate; maleimide monomers such as maleimide, N-cyclohexyl maleimide, and N-phenyl maleimide; amide monomers such as (meth)acrylamide, N, N-dimethyl (meth)acrylamide, N, N-diethyl (meth)acrylamide, N-hexyl (meth)acrylamide, N-methyl (meth)acrylamide, N-ethyl (meth)acrylamide, N-butyl (meth)acrylamide, N-methylol (meth)acrylamide, and N-methylolpropane (meth)acrylamide; aminoalkyl (meth)acrylate monomers such as aminoethyl (meth)acrylate, aminopropyl (meth)acrylate, N, N-dimethylaminoethyl (meth)acrylate, and tert-butylaminoethyl (meth)acrylate; and succinimide monomers such as N-(meth)acryloyloxymethylene succinimide, N-(meth)acryloyl-6-oxyhexamethylene succinimide, and N-(meth)acryloyl-8-oxyoctamethylene succinimide.

Examples of the multifunctional monomer include: monomers having two polymerizable groups such as ethylene glycol di(meth)acrylate, polyethylene glycol di(meth)acrylate, polypropylene glycol di(meth)acrylate, neopentyl glycol di(meth)acrylate, tripropylene glycol di(meth)acrylate, di(meth)acrylate of alkylene oxide adduct of bisphenol A, tetraethylene glycol di(meth)acrylate, hydroxypivalic acid neopentyl glycol di(meth)acrylate, 1,4-butanediol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyldiol di(meth)acrylate, 3-ethyl-1,8-octanediol di(meth)acrylate, and EO adduct of bisphenol A di(meth)acrylate; and monomers having three or more polymerizable groups such as trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris[(meth)acryloyloxyethyl] isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl] isocyanurate.

(Photopolymerization initiator)

The photopolymerization initiator can be appropriately selected from known radical photopolymerization initiators and used. Examples of the photopolymerization initiator include 1-hydroxycyclohexyl phenyl ketone (Omnirad 184, manufactured by IGM Resins), 2,2-dimethoxy-2-phenylacetophenone, 1-(4-isopropylphenyl)-2-hydroxy-2-methylpropan-1-one, bis(2,6-dimethoxybenzoyl)-2,4,4-trimethylpentylphosphine oxide, 2-methyl-1-[4-(methylthio)phenyl]-2-morpholino-propan-1-one (Omnirad 907 manufactured by IGM Resins), 2,4,6-trimethylbenzoyldiphenylphosphine oxide (Omnirad TPO manufactured by IGM Resins), and bis(2,4,6-trimethylbenzoyl) phenylphosphine oxide (Omnirad 819, manufactured by IGM Resins).

The content of the photopolymerization initiator is preferably 0.2% by mass or more and 6.0% by mass or less, more preferably 0.4% by mass or more and 3.0% by mass or less, and further preferably 0.6% by mass or more and 2.0% by mass or less based on the total amount of the photopolymerizable compound.

(Surface-modified inorganic oxide particles)

The surface-modified inorganic oxide particles according to the present embodiment have an ultraviolet curable functional group on the surface. The surface-modified inorganic oxide particles have an ultraviolet curable functional group, and therefore can form covalent bonds with the photopolymerizable compound such as urethane (meth)acrylate. From the viewpoint of allowing to achieve both high Young's modulus and excellent toughness, it is preferable that the ultraviolet curable functional group is an acryloyl group, a methacryloyl group, or a vinyl group.

The surface-modified inorganic oxide particles according to the present embodiment can be obtained by treating the surface of the inorganic oxide particles with a silane compound having an ultraviolet curable functional group to introduce the ultraviolet curable functional group onto the surface of the inorganic oxide particles. That is, the surface-modified inorganic oxide particles according to the present embodiment are composed of an inorganic component and an organic component.

The organic component is a component derived from a silane compound having an ultraviolet curable functional group, and is a surface-modifying component formed on the surface of the inorganic oxide particles by surface treatment of the inorganic oxide particles. The organic component contains a physically adsorbed component attached to the inorganic oxide particles by intermolecular forces and a chemically adsorbed component chemically bonded to the inorganic oxide particles. In the surface-modified inorganic oxide particles according to the present embodiment, the content of the chemically adsorbed component in the organic component is more than 70% by mass based on the total amount of the organic component (the total amount of the surface modifying component modifying the surface of the inorganic oxide particles). Using such surface-modified inorganic oxide particles can form a resin layer capable of having both high Young's modulus and excellent toughness. From the viewpoint of capable of further achieving both high Young's modulus and excellent toughness, the content of the chemically adsorbed component in the organic component constituting the surface-modified inorganic oxide particles is preferably 71% by mass or more, more preferably 73% by mass or more, and further preferably 75% by mass or more, based on the total amount of the organic component. From the same point of view, the content of the chemically adsorbed component in the organic component constituting the surface-modified inorganic oxide particles may be 80% by mass or more, 85% by mass or more, 90% by mass or more, or 95% by mass or more, based on the total amount of the organic component.

Examples of the silane compound having an ultraviolet curable functional group include 3-methacryloxypropyltrimethoxysilane, 3-acryloxypropyltrimethoxysilane, 3-methacryloxypropyltriethoxysilane, 3-acryloxypropyltriethoxysilane, 8-methacryloxyoctyltrimethoxysilane, 8-acryloxyoctyltrimethoxysilane, 7-octenyltrimethoxysilane, vinyltrimethoxysilane, and vinyl triethoxysilane.

Due to excellent dispersion properties in the resin composition and easy formation of the smooth resin layer, it is preferable that the inorganic oxide particles comprise at least one selected from the group consisting of silicon dioxide (silica), zirconium dioxide (zirconia), aluminum oxide (alumina), magnesium oxide (magnesia), titanium oxide (titania), tin oxide, and zinc oxide. From the view point of excellent inexpensiveness, easy surface treatment, permeability to ultraviolet ray, and easy provision of a resin layer with appropriate hardness, it is more preferable that silica particles are used as the inorganic oxide particles.

The surface-modified inorganic oxide particles according to the present embodiment may be dispersed in a dispersion medium. Using the surface-modified inorganic oxide particles dispersed in the dispersion medium allows for uniform dispersion of the inorganic oxide particles in the resin composition and then improvement of the storage stability of the resin composition. The dispersion medium is not particularly limited as long as curing of the resin composition is not obstructed. The dispersion medium may be a reactive dispersion medium or a non-reactive dispersion medium.

A monomer such as a (meth)acryloyl compound and an epoxy compound may be used as the reactive dispersion medium. Examples of the (meth)acryloyl compound include 1,6-hexanediol di(meth)acrylate, EO-modified bisphenol A di(meth)acrylate, polyethylene glycol di(meth)acrylate, PO-modified bisphenol A di(meth)acrylate, polypropylene glycol di(meth)acrylate, polytetramethylene glycol di(meth)acrylate, 2-hydroxy-3-phenoxypropyl acrylate, (meth)acrylic acid adduct of propylene glycol diglycidyl ether, (meta)acrylic acid adduct of tripropylene glycol diglycidyl ether, and (meth)acrylic acid adduct of glycerin diglycidyl ether.

As the non-reactive dispersion medium, a ketone solvent such as methyl ethyl ketone (MEK), an alcohol solvent such as methanol (MeOH) or propylene glycol monomethyl ether (PGME), or an ester solvent such as propylene glycol monomethyl ether acetate (PGMEA) may be used. In the case of the non-reactive dispersion medium, the resin composition may be prepared by mixing the surface-modified inorganic oxide particles dispersed in the dispersion medium and the base resin (resin composition other than the surface-modified inorganic oxide particles) and removing a part of the dispersion medium. From the viewpoint of capable of further increasing the content of the chemically adsorbed component in the organic component constituting the surface-modified inorganic oxide particles, it is preferable to use the alcohol solvent, more preferably methanol as the dispersion medium.

The surface-modified inorganic oxide particles dispersed in the dispersion medium remains to be dispersed in the resin layer after curing of the resin composition. When reactive dispersion medium is used, the surface-modified inorganic oxide particles are mixed with the dispersion medium in the resin composition and are incorporated in the resin layer with the dispersion condition maintained. When non-reactive dispersion medium is used, at least a part of the dispersion medium evaporates and disappears from the resin composition, but the surface-modified inorganic oxide particles remain in the resin composition with the dispersion condition remained and are also present in the postcure resin layer with the dispersion condition remained. Electron microscope observation shows that the surface-modified inorganic oxide particles present in the resin layer are in the condition of dispersion of the primary particle.

When the dispersion medium containing surface-modified inorganic oxide particles is observed by an X-ray small angle scattering method and no aggregated particles are observed, the surface-modified inorganic oxide particles are dispersed as primary particles. From the viewpoint of capable of further achieving both high Young's modulus and excellent toughness for the resin layer, the average primary particle size of the surface-modified inorganic oxide particles is preferably 100 nm or less, more preferably 50 nm or less, further preferably 40 nm or less, and particularly preferably 30 nm or less. The average primary particle size of the surface-modified inorganic oxide particles may be 1 nm or more, 2 nm or more, or 5 nm or more. The average primary particle diameter can be measured with image analysis of electron microscope pictures, a light scattering method or a BET method, for example. The average primary particle size can be measured in accordance with the method described in any of JIS Z 8827-1, JIS Z 8827-2, JIS Z 8828, or JIS Z 8830. The dispersion medium in which the primary particles of the surface-modified inorganic oxide particles are dispersed seems to be visually transparent when the primary particle size is small. When the diameter of the primary particle diameter is relatively large (40 nm or more), the dispersion medium in which the primary particle is dispersed appears to be clouded, but the precipitate is not observed.

The content of the surface-modified inorganic oxide particles is preferably 1% by mass or more and 60% by mass or less, more preferably 3% by mass or more and 55% by mass or less, further preferably 5% by mass or more and 50% by mass or less, and particularly preferably 10% by mass or more and 40% by mass or less, based on the total amount of the resin composition. The content of the surface-modified inorganic oxide particles is 1% by mass or more, allowing a resin layer having high Young's modulus to be easily formed. The content of the surface-modified inorganic oxide particles is 60% by mass or less, resulting in easy improvement in the application properties of the resin composition and allowing for easy formation of a tough resin layer. The total amount of the resin composition and the total amount of the cured product of the resin composition may be considered to be the same. The content of the surface-modified inorganic oxide particles is preferably 1% by mass or more and 60% by mass or less, more preferably 3% by mass or more and 55% by mass or less, further preferably 5% by mass or more and 50% by mass or less, and particularly preferably 10% by mass or more and 40% by mass or less, based on the total amount of the secondary resin layer (the total amount of the cured product of the resin composition constituting the secondary resin layer).

The total amount of the organic component constituting the surface-modified inorganic oxide particles may be 0.15 mg/m$^2$ or more, 0.20 mg/m$^2$ or more, 0.25 mg/m$^2$ or more, or 0.30 mg/m$^2$ or more, and may be 2.5 mg/m$^2$ or less, 2.2 mg/m$^2$ or less, 2.0 mg/m$^2$ or less, or 1.8 mg/m$^2$ or less. The total amount of the organic component is in the above range, allowing the viscosity of the resin composition to be easily adjusted. The total amount of the organic component can be calculated from the specific surface area of the surface-modified inorganic oxide particles and the ratio of the organic component. The specific surface area can be measured by a nitrogen adsorption BET method, and the ratio of the organic component can be measured by thermogravimetric/differential thermal analysis (TG/DTA).

(Other components)

The resin composition may further contain a silane coupling agent, a leveling agent, an antifoaming agent, an antioxidant, a sensitizer, and the like.

Examples of the silane coupling agent include tetramethyl silicate, tetraethyl silicate, mercaptopropyl trimethoxysilane, vinyltrichlorosilane, vinyltriethoxysilane, vinyltris(P-methoxy-ethoxy)silane, P-(3,4-epoxycyclohexyl)-ethyltrimethoxysilane, dimethoxydimethylsilane, diethoxydimethylsilane, 3-acryloxypropyltrimethoxysilane, γ-glycidoxypropyltrimethoxysilane, γ-glycidoxypropylmethyldiethoxysilane, γ-methacryloxypropyltrimethoxysilane, N-(β-aminoethyl)-γ-aminopropyltrimethoxysilane, N-(β-aminoethyl)-γ-aminopropyltrimethyldimethoxysilane, N-phenyl-γ-aminopropyltrimethoxysilane, γ-chloropropyltrimethoxysilane, γ-mercaptopropyltrimethoxysilane, γ-aminopropyltrimethoxysilane, bis-[3-(triethoxysilyl)propyl]tetrasulfide, bis-[3-(triethoxysilyl)propyl]disulfide, γ-trimethoxysilylpropyldimethylthiocarbamyl tetrasulfide, and γ-trimethoxysilylpropyl benzothiazyl tetrasulfide.

The resin composition according to the present embodiment is preferably used as the secondary coating material for the optical fiber. An optical fiber having excellent lateral pressure characteristics and toughness can be produced by using the resin composition according to the present embodiment for the secondary resin layer.

<Optical fiber>

The optical fiber according to the present embodiment comprises: a glass fiber comprising a core and a cladding; a primary resin layer being in contact with the glass fiber and coating the glass fiber; and a secondary resin layer coating the primary resin layer. FIG. 1 is a schematic cross-section diagram showing an example of the optical fiber according to the present embodiment. The optical fiber 10 comprises the glass fiber 13 including the core 11 and the cladding 12, and the coating resin layer 16 including the primary resin layer 14 provided on the outer periphery of the glass fiber 13 and the secondary resin layer 15.

The cladding 12 surrounds the core 11. The core 11 and the cladding 12 mainly include glass such as silica glass, germanium-added silica or pure silica can be used, for example, in the core 11, and pure silica or fluorine-added silica can be used in the cladding 12.

In FIG. 1, for example, the outside diameter (D2) of the glass fiber 13 is about 100 μm to 125 μm, and the diameter (D1) of the core 11 constituting the glass fiber 13 is about 7 μm to 15 μm. The thickness of the coating resin layer 16 is typically about 22 μm to 70 μm. The thickness of each of the primary resin layer 14 and the secondary resin layer 15 may be about 5 μm to 50 μm.

When the outside diameter (D2) of the glass fiber 13 is about 125 μm and the thickness of the coating resin layer 16 is 60 μm or more and 70 μm or less, the thickness of each of the primary resin layer 14 and the secondary resin layer 15 may be about 10 μm to 50 μm, and for example, the thickness of the primary resin layer 14 may be 35 μm and the thickness of the secondary resin layer 15 may be 25 μm. The outside diameter of the optical fiber 10 may be about 245 μm to 265 μm.

When the outside diameter (D2) of the glass fiber 13 is about 125 μm and the thickness of the coating resin layer 16 is 27 μm or more and 48 μm or less, the thickness of each of the primary resin layer 14 and the secondary resin layer 15 may be about 10 μm to 38 μm, and for example, the thickness of the primary resin layer 14 may be 25 μm and the thickness of the secondary resin layer 15 may be 10 μm. The outside diameter of the optical fiber 10 may be about 179 μm to 221 μm.

When the outside diameter (D2) of the glass fiber 13 is about 100 μm and the thickness of the coating resin layer 16 is 22 μm or more and 37 μm or less, the thickness of each of the primary resin layer 14 and the secondary resin layer 15 may be about 5 μm to 32 μm, and for example, the thickness of the primary resin layer 14 may be 25 μm and the thickness of the secondary resin layer 15 may be 10 μm. The outside diameter of the optical fiber 10 may be about 144 μm to 174 μm.

The secondary resin layer 15 contains a cured product of the resin composition according to the present embodiment. The secondary resin layer 15 contains the cured product of the resin composition according to the present embodiment, thereby allowing an optical fiber having excellent lateral pressure characteristics and toughness to be produced.

From the viewpoint of further improving the lateral pressure characteristics of the optical fiber, the Young's modulus of the secondary resin layer 15 is preferably 1200 MPa or more, more preferably 1400 MPa or more, and further preferably 1600 MPa or more at 23°C ± 2°C. From the viewpoint of imparting appropriate toughness to the secondary resin layer, the Young's modulus of the secondary resin layer is preferably 3500 MPa or less, and more preferably 3000 MPa or less at 23°C ± 2°C.

The primary resin layer 14 can be formed by curing a resin composition including a photopolymerizable compound, a photopolymerization initiator and a silane coupling agent. Prior art techniques can be used for a resin composition for the primary coating. The photopolymerizable compound, photopolymerization initiator, and silane coupling agent may be appropriately selected from the compounds exemplified for the above resin composition. The resin composition forming the primary resin layer has composition different from the resin composition forming the secondary resin layer.

From the viewpoint of suppressing the generation of voids in the optical fiber, the Young's modulus of the primary resin layer 14 is preferably 0.04 MPa or more and 1.0 MPa or less, more preferably 0.05 MPa or more and 0.9 MPa or less, and further preferably 0.05 MPa or more and 0.8 MPa or less at 23°C ± 2°C.

A plurality of optical fibers is arranged in parallel and integrated with a ribbon resin to form an optical fiber ribbon. The resin composition according to the present disclosure can also be used as the ribbon resin. This can improve the lateral pressure characteristics and toughness of the optical fiber ribbon as in the case of the optical fiber.

<Method for manufacturing optical fiber>

A method for manufacturing an optical fiber according to the present embodiment comprises: an application step of applying the resin composition according to the present embodiment to the outer periphery of a glass fiber comprising a core and a cladding; and a curing step of curing the resin composition by irradiating with ultraviolet rays after the application step. This can produce an optical fiber having excellent lateral pressure characteristics and toughness. The resin composition according to the present embodiment is not directly applied to the glass fiber, but the resin composition for primary coating is directly applied to the glass fiber. That is, in the application step, the primary coating that contacts the glass fiber and the secondary coating that does not contact the glass fiber by the resin composition according to the present embodiment are formed.

**Examples**

Hereinafter, the results of evaluation test using Examples and Comparative Examples according to the present disclosure will be shown, and the present disclosure is described in more detail. The present disclosure is not limited to these examples.

[Preparation of resin composition]

(Urethane acrylate)

As a urethane acrylate, urethane acrylate obtained by reacting polypropylene glycol having Mn of 600, 2,4-tolylene diisocyanate, and 2-hydroxyethyl acrylate was prepared.

(Epoxy acrylate)

As an epoxy acrylate, Viscoat #540 (trade name, manufactured by Osaka Organic Chemical Industry Ltd.) was prepared.

(Monomer)

As the monomer, isobomyl acrylate (trade name "IBXA", manufactured by Osaka Organic Chemical Industry Ltd.), 2-phenoxyethyl acrylate (trade name "Light acrylate PO-A", manufactured by Kyoeisha Chemical Co., Ltd.), and tripropylene glycol diacrylate (trade name "TPGDA", manufactured by Daicel-Allnex Ltd.) were prepared.

(Photopolymerization initiator)

As the photopolymerization initiator, 2,4,6-trimethylbenzoyldiphenylphosphine oxide (Omnirad TPO) was prepared.

(Surface-modified inorganic oxide particles)

As surface-modified inorganic oxide particles, silica sol of each test example containing silica particles surface-treated with 3-methacryloxypropyltrimethoxysilane (surface-modified silica particles) shown in Table 1 was prepared. Test Examples 1 to 6 correspond to examples, and Test Example 7 corresponds to a comparative example. The average primary particle size of the surface-modified silica particles shown in Table 1 was measured based on JIS Z 8830.

(Resin composition)

A base resin was prepared by mixing 20 parts by mass of urethane acrylate, 40 parts by mass of epoxy acrylate, 15 parts by mass of isobomyl acrylate, 20 parts by mass of 2-phenoxyethyl acrylate, 5 parts by mass of tripropylene glycol diacrylate, and 1 part by mass of 2,4,6-trimethylbenzoyldiphenylphosphine oxide. After mixing the base resin and the silica sol, the majority of dispersion medium was removed to prepare a resin composition of each test example so that the content of the silica-modified silica particles in the resin composition was 30% by mass.

[Table 1]

| | | Surface modified silica particles | | Dispersion medium |
|---|---|---|---|---|
| | | Average primary particle size (nm) | Content of chemically absorbed component (% by mass) | |
| Test Example | 1 | 5-10 | 85 | MeOH |
| | 2 | 10-15 | 80 | MeOH |
| | 3 | 10-15 | 90 | MeOH |
| | 4 | 10-15 | 98 | MeOH |
| | 5 | 15-20 | 80 | MeOH |
| | 6 | 20-25 | 75 | MeOH |
| | 7 | 10-15 | 70 | MEK |

(Measurement of content of chemically adsorbed components)

Four mL of each silica sol was sampled, subjected to volatilization of the dispersion medium in the atmosphere, and then dried in a constant temperature bath at 80°C for 24 hours to obtain surface-modified silica particles A. For the surface-modified silica particles A, the peak area A of the thermal decomposition product of the organic component constituting the surface-modified silica particles A was measured by using a pyrolysis gas chromatograph/mass spectrometer (Py-GC/MS). The organic component constituting the surface-modified silica particles A is composed of a physically adsorbed component derived from 3-methacryloxypropyltrimethoxysilane and a chemically adsorbed component derived from 3-methacryloxypropyltrimethoxysilane. The thermal decomposition product of the organic component contains methacrylic acid and the like.

The surface-modified silica particles A obtained in the same manner as described above were ultrasonically washed with methanol for 3 minutes, and then the methanol was removed by centrifugation. After performing the same ultrasonic washing with methanol three times in total, drying was performed in a constant temperature bath at 80°C for 24 hours to obtain surface-modified silica particles B. For the surface-modified silica particles B, the peak area B of the thermal decomposition product of the organic component constituting the surface-modified silica particles B was measured by using Py-GC/MS.

The physically adsorbed component derived from 3-methacryloxypropyltrimethoxysilane contained in the organic component constituting the surface-modified silica particles A was removed by the ultrasonic washing with methanol, and thus the content of the chemically adsorbed component derived from 3-methacryloxypropyltrimethoxysilane contained in the organic component constituting the surface-modified silica particles A was calculated by the following formula.

$$\text{Content of chemically adsorbed component} = \text{peak area B} / \text{peak area A} \times 100\%$$

(Pyrolysis gas chromatograph/mass spectrometer)

Measuring apparatus: 6890N/5973Network manufactured by Agilent technologies, Inc.
Pyrolyzer: PY-2020iD, MJT-1030Ex manufactured by Frontier Laboratories Ltd.
Column: UA-5 (inner diameter 0.25 mm × length 30 m, film thickness 0.25 $\mu$m) manufactured by Frontier Laboratories Ltd.
Thermal decomposition: 500°C × 0.2 minutes
Inlet: 300°C, split ratio 50 : 1
Trap: -150°C
Oven: raising temperature from 50°C to 320°C at a rate of 25°C/min and keeping at 320°C for 5 minutes
Carrier: He gas (column flow rate: 1 mL/min)
Ionization method: electron ionization method (EI)
MS temperature: 230°C (ion source), 150°C (quadrupole)
Mass range: 33 to 550 a.m.u.

(Young's modulus of resin layer)

The resin composition of each test example was applied onto a polyethylene terephthalate (PET) film by using a spin coater, and then cured by using an electrodeless UV lamp system ("VPS 600 (D valve)" manufactured by Heraeus) at a condition of 1000 ± 100 mJ/cm$^2$ to form a resin layer having a thickness of 200 ± 20 $\mu$m on the PET film. The resin layer was peeled off from the PET film to obtain a resin film.
The resin film was punched into a dumbbell shape of JIS K 7127 type 5 and pulled under the condition of 23 ± 2°C and 50 ± 10% RH by using a tensile tester at a tension speed of 1 mm/min and a distance between marked lines of 25 mm, and a stress-strain curve was obtained. Young's modulus was determined by 2.5% secant line.

[Production of an optical fiber]

The resin composition for primary coating was obtained by mixing 75 parts by mass of urethane acrylate obtained by reacting polypropylene glycol of Mn 4000, isophorone diisocyanate, 2-hydroxyethyl acrylate, and methanol, 12 parts by mass of nonylphenol EO-modified acrylate, 6 parts by mass of N-vinylcaprolactam, 2 parts by mass of 1,6-hexanediol diacrylate, 1 part by mass of 2,4,6-trimethylbenzoyldiphenylphosphine oxide, and 1 part by mass of 3-mercaptopropyltrimethoxysilane.
The resin composition for primary coating was applied as the primary resin layer and the resin composition of each test example as the secondary resin layer on the outer periphery of a glass fiber with a diameter of 125 $\mu$m composed of a core and a cladding, and then the resin composition was cured by irradiating with ultraviolet rays and a primary resin layer having a thickness of 35 $\mu$m and a secondary resin layer having a thickness of 25 $\mu$m around the outer periphery of the primary resin layer were formed to produce an optical fiber. A linear speed was 1500 m/min.

(Lateral pressure characteristics)

The transmission loss of light having a wavelength of 1550 nm when the optical fiber was wound into a single layer onto a bobbin with its surface covered with sandpaper and having a diameter of 280 mm was measured by an OTDR (Optical Time Domain Reflectometer) method. In addition, the transmission loss of light having a wavelength of 1550 nm when the optical fiber was wound into a single layer on a bobbin having a diameter of 280 mm without sandpaper was measured by the OTDR method. Difference in the measured transmission loss was obtained and the lateral pressure characteristics was evaluated as "A" when the transmission loss difference was 0.6 dB/km or less, and the lateral pressure characteristics was evaluated as "B" when the transmission loss difference was over 0.6 dB/km.

(Toughness)

A 1000 m bundle of the optical fiber was immersed for 45 days in mineral oil that had been heated to 85°C, and then the transmission loss of light having a wavelength of 1550 nm was measured by the OTDR method. A case where the difference between the transmission loss before immersion in mineral oil and the transmission loss after immersion was 0.04 dB/km or less was evaluated as "A", and a case where the difference was more than 0.04 dB/km was evaluated as "B". Lowered toughness easily results in coating cracking in a mineral oil deterioration test to increase transmission loss.

[Table 2]

| | | Resin layer | Optical fiber | |
|---|---|---|---|---|
| | | Young's modulus (MPa) | Lateral pressure characteristics | Toughness |
| Test Example | 1 | 2700 | A | A |
| | 2 | 2600 | A | A |
| | 3 | 2600 | A | A |
| | 4 | 2600 | A | A |
| | 5 | 2500 | A | A |
| | 6 | 2400 | A | A |
| | 7 | 2300 | A | B |

**Reference Signs List**

10: Optical fiber, 11: Core, 12: Cladding, 13: Glass fiber, 14: Primary resin layer, 15: Secondary resin layer, 16: Coating resin layer, D1: Diameter of core 11, D2: Outside diameter of glass fiber 13.

**Claims**

1. A resin composition comprising:

   a photopolymerizable compound;
   a photopolymerization initiator; and
   a surface-modified inorganic oxide particle having an ultraviolet curable functional group,
   wherein a content of a chemically adsorbed component in an organic component constituting the surface-modified inorganic oxide particle is more than 70% by mass based on a total amount of the organic component.

2. The resin composition according to claim 1, wherein the functional group is at least one group selected from the group consisting of an acryloyl group, a methacryloyl group, and a vinyl group.

3. The resin composition according to claim 1 or claim 2, wherein an average primary particle size of the surface-modified inorganic oxide particle is 100 nm or less.

4. The resin composition according to any one of claim 1 to claim 3, wherein a content of the surface-modified inorganic oxide particle is 1% by mass or more and 60% by mass or less based on a total amount of the resin composition.

5. A secondary coating material for an optical fiber, comprising the resin composition according to any one of claim 1 to claim 4.

6. An optical fiber comprising:

a glass fiber comprising a core and a cladding;

a primary resin layer being in contact with the glass fiber and coating the glass fiber; and

a secondary resin layer coating the primary resin layer,

wherein the secondary resin layer comprises a cured product of the resin composition according to any one of claim 1 to claim 4.

7. A method for manufacturing an optical fiber, comprising:

an application step of applying the resin composition according to any one of claim 1 to claim 4 onto an outer periphery of a glass fiber composed of a core and a cladding; and

a curing step of curing the resin composition by irradiating with ultraviolet rays after the application step.

# *Fig.1*

## INTERNATIONAL SEARCH REPORT

| International application No. |
|---|
| **PCT/JP2021/040296** |

**A. CLASSIFICATION OF SUBJECT MATTER**

*C08F 290/06*(2006.01)i; *C08K 9/04*(2006.01)i; *C08L 101/00*(2006.01)i; *C08K 3/20*(2006.01)i; *G02B 6/44*(2006.01)i
FI:   C08F290/06; C08L101/00; C08K9/04; C08K3/20; G02B6/44 301A; G02B6/44 331; G02B6/44 301B

According to International Patent Classification (IPC) or to both national classification and IPC

**B. FIELDS SEARCHED**

Minimum documentation searched (classification system followed by classification symbols)

C08F2/00-299/08; G02B6/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-179201 A (SANYO CHEMICAL IND LTD) 05 October 2017 (2017-10-05) claims, paragraphs [0002]-[0003], [0005], [0007], [0010], [0021]-[0026], [0044], [0055], [0064]-[0096] | 1-4, 7 |
| Y | claims, paragraphs [0002]-[0003], [0005], [0007], [0010], [0021]-[0026], [0044], [0055], [0064]-[0096] | 5-6 |
| Y | WO 2019/116967 A1 (SUMITOMO ELECTRIC INDUSTRIES) 20 June 2019 (2019-06-20) claims, examples 1-4, 6 | 5-6 |
| A | | 1-4, 7 |
| Y | WO 2020/101028 A1 (SUMITOMO ELECTRIC INDUSTRIES) 22 May 2020 (2020-05-22) claims, examples 1-12 | 5-6 |
| A | | 1-4, 7 |
| X | JP 2016-3319 A (SHOWA DENKO KK) 12 January 2016 (2016-01-12) claims, paragraphs [0017], [0028]-[0029], [0033]-[0035], [0055]-[0057], [0068]-[0070], [0073]-[0096] | 1-4 |
| A | | 5-7 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 January 2022** | **25 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/040296**

**C.    DOCUMENTS CONSIDERED TO BE RELEVANT**

| Category* | Citation of document, with indication, where appropriate, of the relevant passages | Relevant to claim No. |
|---|---|---|
| A | JP 2006-233167 A (JSR CORP) 07 September 2006 (2006-09-07) | 1-7 |
| A | JP 2000-7717 A (TAKEDA CHEMICAL INDUSTRIES LTD, SHINETSU CHEMICAL CO) 11 January 2000 (2000-01-11) | 1-7 |

Form PCT/ISA/210 (second sheet) (January 2015)

**INTERNATIONAL SEARCH REPORT**
Information on patent family members

International application No.

**PCT/JP2021/040296**

| Patent document cited in search report | | | Publication date (day/month/year) | Patent family member(s) | | | Publication date (day/month/year) |
|---|---|---|---|---|---|---|---|
| JP | 2017-179201 | A | 05 October 2017 | (Family: none) | | | |
| WO | 2019/116967 | A1 | 20 June 2019 | US | 2021/0181410 | A1 | |
| | | | | claims, examples 1-4, 6 | | | |
| | | | | FR | 3076556 | A1 | |
| | | | | CN | 111433242 | A | |
| | | | | KR | 10-2020-0088904 | A | |
| | | | | NL | 2022158 | A | |
| | | | | TW | 201932554 | A | |
| WO | 2020/101028 | A1 | 22 May 2020 | US | 2021/0053870 | A1 | |
| | | | | claims, examples 1-12 | | | |
| | | | | CN | 112955480 | A | |
| JP | 2016-3319 | A | 12 January 2016 | (Family: none) | | | |
| JP | 2006-233167 | A | 07 September 2006 | WO | 2006/049487 | A1 | |
| | | | | KR | 10-2007-0053290 | A | |
| | | | | KR | 10-1273731 | B1 | |
| JP | 2000-7717 | A | 11 January 2000 | (Family: none) | | | |

Form PCT/ISA/210 (patent family annex) (January 2015)

16

**REFERENCES CITED IN THE DESCRIPTION**

**Patent documents cited in the description**

- JP 2020208204 A

- JP 2014219550 A